# EUROPEAN PATENT APPLICATION

(11) **EP 3 051 856 A1**
(43) Date of publication of application: **03.08.2016**
(21) Application number: 16153701.4
(22) Date of filing: 01.02.2016
(51) Int. Cl.: H04W 12/08

(54) **CELLULAR DEVICE POLICY CONFLICT MANAGEMENT**

(30) Priority: 02.02.2015 GB 201501658
(71) Applicant: Chemring Technology Solutions Limited, Romsey, Hampshire SO51 0ZN (GB)
(72) Inventor: Toner, Ben, Romsey, Hampshire SO51 0ZN (GB)
(74) Representative: Thompson, Andrew John

(57) **Abstract**

A communications network, comprising a network server configured to send network connectivity policies to one or more cellular devices in a cellular network, said network connectivity policies defining one or more subscribed local wireless networks (LWNs); and an enterprise server configured to send enterprise connectivity policies to each of the one or more cellular devices, said enterprise connectivity policies defining one or more rules for accessing LWNs; wherein the network server is configured to receive notifications from each of the one or more cellular devices, when said devices detect a first one of said subscribed LWNs; in response to a notification from a first one of the one or more cellular devices that the first one of said subscribed LWNs has been detected, but for which the cellular device cannot connect to due to rules defined by the enterprise connectivity policy, the network server is arranged to send a request to the enterprise server to update an enterprise connectivity policy associated with the first one said one or more cellular devices to allow that cellular device to connect to the first one of said subscribed LWNs; and in response to the request from the network server, the enterprise server is configured to update or replace the enterprise connectivity policy on the first one of the one or more cellular devices to allow connection of that cellular device to the first one of said subscribed LWNs.

## Description

### FIELD OF THE INVENTION

The present invention relates to conflict management in communications networks, in particular cellular and local wireless communications networks (LWNs).

### BACKGROUND TO THE INVENTION

Cellular network operators use local wireless networks (LWNs) alongside cellular 3G and 4G networks to help boost data connectivity and reduce the strain on heavily loaded cellular infrastructures. In urban environments, where local wireless networks are abundant and the strain on cellular networks is high, the load on cellular networks can be eased by transferring data connectivity partially or completely from the cellular networks to local wireless networks.

In certain circumstances, however, connection of cellular devices to local wireless networks may be restricted by policies determined by entities other than the network provider. Such policies are often implemented by IT departments of large enterprises who wish to restrict access by employees' cellular devices to certain local wireless networks (e.g. Wi-Fi) in the interests of security.

### SUMMARY OF THE INVENTION

According to a first aspect of the invention there is provided a communications network, comprising: a network server configured to send network connectivity policies to one or more cellular devices in a cellular network, said network connectivity policies defining one or more subscribed local wireless networks (LWNs); and an enterprise server configured to send enterprise connectivity policies to each of the one or more cellular devices, said enterprise connectivity policies defining one or more rules for accessing LWNs; wherein the network server is configured to receive notifications from each of the one or more cellular devices, when said devices detect a first one of said subscribed LWNs; in response to a notification from a first one of the one or more cellular devices that the first one of said subscribed LWNs has been detected but for which the cellular device cannot connect to due to rules defined by the enterprise connectivity policy, the network server is arranged to send a request to the enterprise server to update an enterprise connectivity policy associated with the first one said one or more cellular devices to allow that cellular device to connect to the first one of said subscribed LWNs; and in response to the request from the network server, the enterprise server is configured to update or replace the enterprise connectivity policy on the first one of the one or more cellular devices to allow connection of that cellular device to the first one of said subscribed LWNs.

According to a second aspect of the invention, there is provided a network server configured to: push network connectivity policies to one or more cellular devices in a cellular network, the network connectivity policies defining one or more subscribed local wireless networks (LWNs); receive notifications from each of the one or more cellular devices, when said devices detect a first one of said subscribed LWNs; in response to a notification from a first one of said one or more cellular devices indicating that the first one of said subscribed LWNs has been detected but for which the cellular device cannot connect to due to rules defined by an enterprise connectivity policy located on the cellular device, send a request to an enterprise server to update the enterprise connectivity policy associated with the first one of said one or more cellular devices to allow that cellular device to connect to the first one of said subscribed LWNs.

According to a third aspect of the invention, there is provided an enterprise server configured to: push enterprise connectivity policies to one or more cellular devices in a cellular network, the enterprise connectivity policies defining one or more rules for accessing local wireless networks (LWNs); in response to receiving a request from a network server indicating that a subscribed LWN has been detected by a first one of the one or more cellular devices but for which the cellular device cannot connect to due to rules defined by the enterprise connectivity policy associated with the cellular device, updating the enterprise connectivity policy to allow that cellular device to the subscribed LWN.

According to a fourth aspect of the invention, there is provided a cellular device for connecting to a cellular network and one or more local wireless networks (LWNs), the cellular device is configured to: receive a network policy from a network server, the network policy defining one or more subscribed LWNs; receive an enterprise connectivity policy from an enterprise server, the enterprise connectivity policy defining one or more rules for connecting to LWNs; notify the network server on identification of a subscribed LWN which the cellular device cannot connect to due to rules defined by the enterprise connectivity policy; and receive an update to or replacement for the enterprise connectivity policy from an enterprise server, the update or replacement defining rules for connecting to the subscribed LWN.

According to a fifth aspect of the invention, there is provided a communications network comprising a first server arranged to push first connection policies to one or more wireless devices, and a second server arranged to push second connection policies to the one or more wireless devices, wherein the first server is arranged to receive notifications from a wireless device when that device attempts to connect to a wireless access point, if a second connection policy on the wireless device prevents access to that access point, and the first server is further arranged to send a request to the second server, requesting that the second connection policy on the wireless device be updated to allow access to the access point.

According to a sixth aspect of the invention, there is provided a server in a communications network arranged to push first connection policies to one or more wireless devices, wherein the server is arranged to receive notifications from a wireless device when that device attempts to connect to a wireless access point, if a second connection policy on the wireless device prevents access to that access point, and the first server is further arranged to send a notification to a second server, requesting that the second connection policy on the wireless device be updated to allow access to the access point.

According to a seventh aspect of the invention, there is provided a server in a communications network arranged to push first connection policies to one or more wireless devices, wherein the server is arranged to receive notifications from a second server, requesting that a first connection policy on the wireless device be updated to allow access to the access point, when that wireless device attempts to connect to a wireless access point, if the first connection policy prevents access to that access point.

According to an eighth aspect of the invention, there is provided a method of providing wireless devices with access to access points in a communications network, in which the wireless devices include first connection policies issued by a first server and second connection policies issued by a second server, the method comprising: if a second connection policy prevents a wireless device accessing a wireless access point to which access has been granted by a first connection policy, the first server requesting that the second server update the second connection policy to allow the wireless device access to the access point.

Further examples are described below and defined in the claims.

### BRIEF DESCRIPTION OF THE DRAWINGS

Embodiments of the present invention will now be described, by non-limiting example only, with reference to the accompanying drawings, in which:
Figure 1 is a block diagram of a communications network according to an embodiment of the present invention;
Figure 2 is a flow diagram for a network server according to an embodiment of the present invention;
Figure 3 is a flow diagram for a cellular device according to an embodiment of the present invention; and
Figure 4 is a flow diagram for an enterprise server according to an embodiment of the present invention.

### DESCRIPTION OF EMBODIMENTS OF THE INVENTION

Embodiments of the present invention address problems associated with conflicts between enterprise policies set by IT departments of large organisations and the requirements for cellular network operators to hand off data connectivity from cellular networks to local wireless networks. A conflict may arise where a cellular network provider wishes to transfer connectivity of a cellular device from a cellular network to a local wireless network, but the enterprise policy set by an IT department for that device disallows access to the local wireless network defined by the network operator.

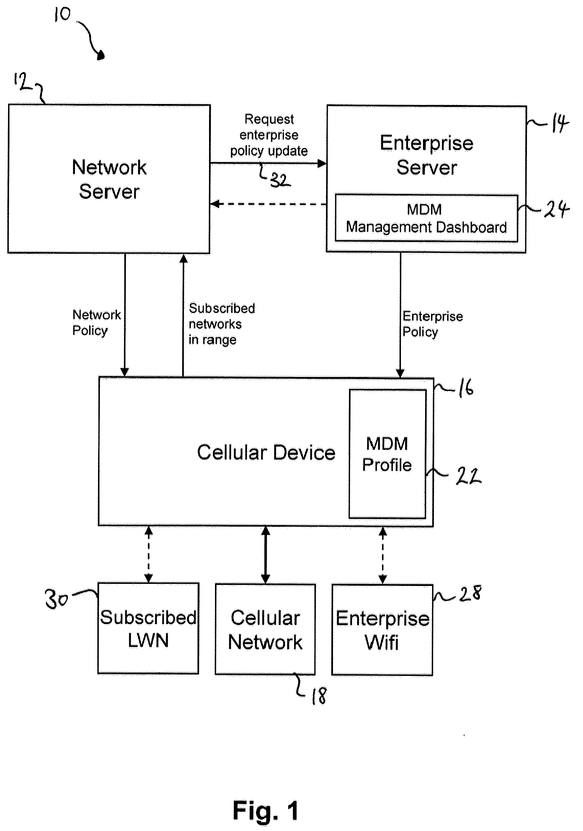

Figure 1 schematically illustrates a communications network 10 according to an embodiment of the present invention. The communications network 10 comprises a network server 12, an enterprise server 14 and one or more cellular devices 16. For simplicity, only a single cellular device has been shown in Figure 1. It will be appreciated, however, that the communications network may include many more cellular devices comparable to the cellular device 16 which each may operate in a similar manner. The network server 12 may be run by one or more cellular network providers or network operators to which the cellular device 16 is subscribed.

The cellular device 16 in the communications network may be operable to connect to one or more cellular networks 18 to which it is subscribed. Additionally, the cellular device 16 may be operable to connect to one or more local wireless networks (LWNs), e.g. Wi-Fi networks. The cellular device 16 may have implemented thereon a mobile device management (MDM) profile 22. This may, for example, be implemented using an MDM client running on the cellular device 16. The cellular device 16 may be operable to receive updates to the MDM profile 22 implemented on the cellular device 16 from the enterprise server 14, as will be described in more detail below. It is the case with many commercial cellular devices 16 that only a single MDM profile 22 can be implemented at any one time so as to avoid conflicts which would otherwise arise between multiple MDM profiles running on a single device. Additionally, each MDM profile (or client) is usually responsive only to a single MDM server and so may only be updated by that server.

In addition to receiving enterprise policies from the enterprise server 14, the cellular device 16 may be configured to receive one or more network policies from the network server 12. These policies may include information concerning which cellular networks the cellular device 16 is authorised to connect to. Such information may correspond to service subscriptions that the cellular device 16 has with a network provider. Such services may include 3G, 4G or other cellular network protocols, in addition to any associated LWN services used to improve data connectivity or otherwise.

The enterprise server 14 may be implemented by the IT department of an organisation to which the cellular device 16 is associated. For example, the cellular device 16 may belong to an employee of the organisation which implements the enterprise server 14. Such devices may, for example, belong to the organisation and be provided to the employee to support his job role, or alternatively the device 16 could be a personal device owned by the employee but registered with the enterprise server 14 to enable connectivity to services provided by the IT department of the organisation. The enterprise server 14 may be configured to run an MDM management dashboard 24 which may be operable to update the MDM profile 22 running on the cellular device 16 (alongside MDM profiles running on other cellular devices not shown). As mentioned above, the MDM profile 22 may define one or more rules for connecting to cellular networks and other wireless services such as LWNs. In particular, the MDM profile 22 may define restrictions concerning which networks and services the cellular device 16 can connect to. Wireless connectivity may be restricted to, for example, one or more enterprise wireless networks 28 which may be operated by the organisation to which the enterprise server 14 is linked.

Operation of the communications network 10 will now be described with reference to Figure 1 to 4. As mentioned above, the network server 12 is operable to push one or more network policies to the cellular device 16 which may include details of one or more trusted/subscribed local wireless networks 30. Having regard for these network policies, the cellular device 16 may be operable to scan for subscribed LWNs 30 located in connecting range of the cellular device 16 and on identification of a subscribed LWN 30, the cellular device 16 may check the MDM profile 22 to see if connection to the subscribed LWN is allowed by the enterprise server 14. If connection is allowed, then the cellular device 16 may connect to the subscribed LWN 30. If on the other hand the cellular device 16 cannot connect to the subscribed LWN 30 due to a conflict between the MDM profile 22 and the network policy provided by the network server 12, the cellular device 16 may notify the network server 12 that a subscribed LWN is in range but that connection to that network is restricted by the MDM profile 22 of the cellular device 16.

In response to a receipt of a notification from the cellular device 16 that a subscribed LWN is in range but that connection is restricted due to the rules defined in the MDM profile 22, the network server 12 may communicate a request to the enterprise server 14 that a subscribed LWN is in range of the cellular device 16 and that it is secure to connect to such a subscribed LWN. On receipt of this communication over the communications channel 32, the enterprise server 14 may, via the MDM management dashboard 24 or otherwise, update the MDM profile 22 on the cellular device 16 to allow connection to the subscribed LWN 30 by the cellular device 16. Because the enterprise server 14 trusts the request from the network server 12, security of the cellular device 16 and the communications network 10 as a whole is maintained whilst data connectivity of the cellular device 16 is improved due to the handover of bandwidth to the subscribed LWN 30.

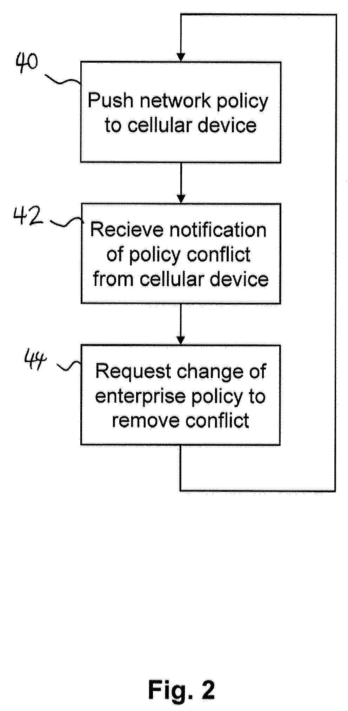

Referring now to Figure 2, a flow diagram is presented which describes a process undertaken by the network server 12 shown in Figure 1. At step 40, the network server pushes one or more network policies to the cellular device 16 which may contain details of one or more subscribed LWNs to which the device may connect due to its subscription or contract with the cellular network provider running the network server 12. The network server 12 may then receive a notification from the cellular device 16 of a policy conflict. A policy conflict may arise when a trusted LWN which is defined in the network policy pushed at the cellular device 16 cannot be connected to due to restrictions defined in the MDM profile 22 implemented on the cellular device 16. A step 44, in response to the receipt of the notification from the cellular device of the policy conflict, the network server 12 may send a request to the enterprise server 14 to remove the conflict between the network policy of the network server 12 and the MDM profile of the cellular device 16.

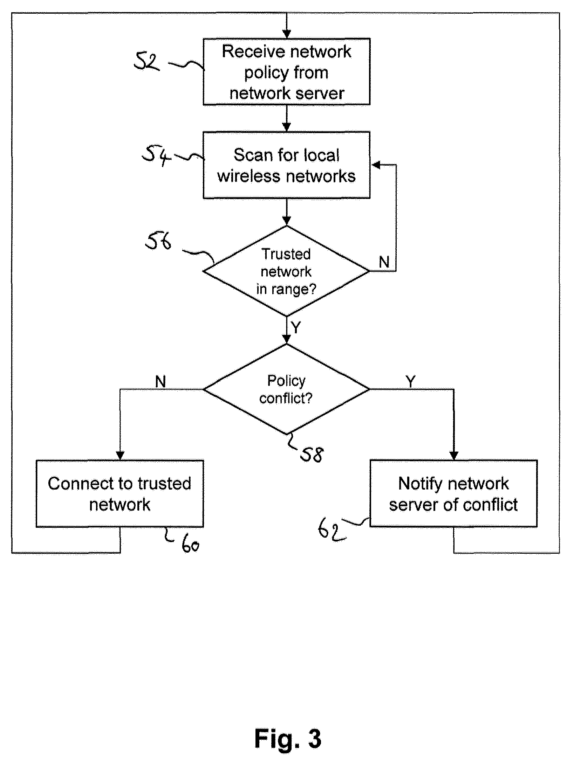

Figure 3 is a flow diagram showing the process performed at the cellular device 16 for connecting to subscribed LWNs defined in network policies received from the network server 12. The cellular device 16 may receive a network policy from the network server 12 at step 52. At step 54 the cellular device 16 may then scan for subscribed LWNs within connecting range of the device 16 which are also defined in the network policy provided by the network server 12 at step 52. This process may involve checking one or more identifiers of the LWNs within connecting range with identifiers defined in the network policy provided by the network server 12. If. at step 56, a subscribed LWN 30 is identified within connecting range of the cellular device 16, the cellular device 16 may then check at step 58 whether or not the MDM profile 22 of the cellular device 16 prohibits connection of the cellular device 16 to the subscribed LWN 30 or whether the trusted local wireless network 30 has already been authorised by the enterprise server 14. If the cellular device 16 is not prevented from connecting to that network by the MDM profile 22, then at step 60 the cellular device 16 may connect to the subscribed LWN 30. The cellular device 16 can then commence sending and receiving data via the trusted local wireless network 30, as described above. If, however, the subscribed LWN 30 within connecting range of the cellular device 16 cannot be connected to due to restrictions defined in the MDM profile 22, then the cellular device 16 may notify the network server 12 at step 62 of a conflict arising between the MDM profile 22 and the network policy received from the network server 12.

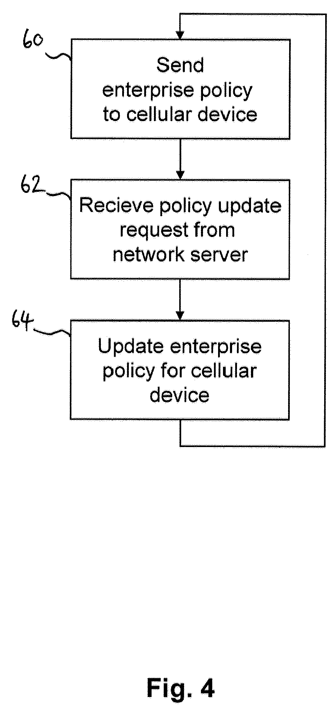

An embodiment of the present invention will now be described from the perspective of the enterprise server 14 with reference to Figure 4 which shows a flow diagram of a process run by the enterprise server 14 for updating the MDM profile 22 implemented on the cellular device 16. The enterprise server 14 is generally operable to push enterprise policies to cellular devices in the communications network 10 as in step 60 of Figure 4. In particular, the enterprise server 14 may push an enterprise policy to the cellular device 16 shown in Figure 1. This policy may update or replace the MDM profile 22 present on that device. The MDM profile 22 on the cellular device 16 may be updated in real time or at regular intervals. The frequency of updates may depend upon the requirements of the organisation to which the enterprise server 14 is associated, or may be based upon policies which the IT department of the organisation define. Additionally or alternatively, the frequency of updates of an MDM profile running in any particular device may be dictated by the cellular device's settings, e.g., power settings. For example, if the cellular device 16 is low on power, the frequency of updates communicated from the enterprise server 14 to the cellular device 16 may be decreased in order to save power. Additionally or alternatively, updated enterprise policies may be communicated to the cellular device 16 whenever a change to that policy is required.

A policy change may, for example, be required when a conflict arises between the MDM profile 22 and the network policy for the cellular device 16, as described above. As mentioned previously, updating of the MDM profile may be performed using an MDM management dashboard 24. However, other methods of updating MDM profiles in cellular devices are known in the art.

Referring again to Figure 4, upon receipt of a request (step 62) from the network server 12 across the communications link 32 to update the rules concerning connection to LWNs by the cellular device 16, the enterprise server 14 may (at step 64) update the enterprise policy for a particular cellular device, i.e. the cellular device 16 shown in Figure 1 and subsequently return to step 60 where the cellular device 16 communicates the updated enterprise policy to the cellular device 16 which may then be used to update the MDM profile 22 running on that device 16.

In a further example, one the enterprise server has updated a connectivity policy, the enterprise server may send the updated policy to other cellular devices. For example, where a number of devices have the same enterprise policy as the device that has detected the conflict, the enterprise server may wish to update those devices in a proactive manner, prior to those devices detecting the conflict.

One of the advantages of the examples described above is that, in the event that a device detects a policy conflict, a mechanism is provided by which policies may be updated. In the prior art, it might be necessary for the network provider to inform an enterprise of any changes to policy, so that enterprise policies can be updated. The above-described examples provide a way of avoiding the need for such updates, and/or capturing any conflicts that have not been noticed.

## Claims

1. A communications network, comprising:
a network server configured to send network connectivity policies to one or more cellular devices in a cellular network, said network connectivity policies defining one or more subscribed local wireless networks (LWNs); and
an enterprise server configured to send enterprise connectivity policies to each of the one or more cellular devices, said enterprise connectivity policies defining one or more rules for accessing LWNs; wherein
the network server is configured to receive notifications from each of the one or more cellular devices, when said devices detect a first one of said subscribed LWNs;
in response to a notification from a first one of the one or more cellular devices that the first one of said subscribed LWNs has been detected but for which the cellular device cannot connect to due to rules defined by the enterprise connectivity policy, the network server is arranged to send a request to the enterprise server to update an enterprise connectivity policy associated with the first one said one or more cellular devices to allow that cellular device to connect to the first one of said subscribed LWNs; and
in response to the request from the network server, the enterprise server is configured to update or replace the enterprise connectivity policy on the first one of the one or more cellular devices to allow connection of that cellular device to the first one of said subscribed LWNs.

2. A communication network according to claim 1, wherein the network connectivity policies define one or more services subscribed to by an associated cellular device.

3. A communications network according to claims 1 or 2, wherein the request from the network server to the enterprise server includes an assurance of security of the first one of said subscribed LWNs.

4. A communications network according to any preceding claim, wherein, in response to receipt of an update or replacement of the enterprise connectivity policy, the first one of the one or more cellular devices is configured to connect to the first one or said subscribed LWNs.

5. A communication network according to any preceding claim, wherein the one or more cellular devices are configured to run a mobile device management (MDM) client operable to implement an associated enterprise connectivity policy.

6. A communications network according to any preceding claim, wherein in response to the request from the network server, the enterprise server is further configured to update or replace the enterprise connectivity policy on one or more further cellular devices.

7. A network server configured to:
push network connectivity policies to one or more cellular devices in a cellular network, the network connectivity policies defining one or more subscribed local wireless networks (LWNs);
receive notifications from each of the one or more cellular devices, when said devices detect a first one of said subscribed LWNs;
in response to a notification from a first one of said one or more cellular devices indicating that the first one of said subscribed LWNs has been detected but for which the cellular device cannot connect to due to rules defined by an enterprise connectivity policy located on the cellular device, send a request to an enterprise server to update the enterprise connectivity policy associated with the first one of said one or more cellular devices to allow that cellular device to connect to the first one of said subscribed LWNs.

8. An enterprise server configured to:
push enterprise connectivity policies to one or more cellular devices in a cellular network, the enterprise connectivity policies defining one or more rules for accessing local wireless networks (LWNs);
in response to receiving a request from a network server indicating that a subscribed LWN has been detected by a first one of the one or more cellular devices but for which the cellular device cannot connect to due to rules defined by the enterprise connectivity policy associated with the cellular device, updating the enterprise connectivity policy to allow that cellular device to the subscribed LWN.

9. A cellular device for connecting to a cellular network and one or more local wireless networks (LWNs), the cellular device is configured to:
receive a network policy from a network server, the network policy defining one or more subscribed LWNs;
receive an enterprise connectivity policy from an enterprise server, the enterprise connectivity policy defining one or more rules for connecting to LWNs;
notify the network server on identification of a subscribed LWN which the cellular device cannot connect to due to rules defined by the enterprise connectivity policy; and
receive an update to or replacement for the enterprise connectivity policy from an enterprise server, the update or replacement defining rules for connecting to the subscribed LWN.

10. A cellular device according to claim 9, wherein in response to receipt of an update for the enterprise connectivity policy, the cellular device is arranged to update the enterprise connectivity policy implemented thereon and connect to the subscribed LWN.

11. A cellular device according to claims 9 or 10, wherein in response to receipt of the replacement to the enterprise connectivity policy from the enterprise server, the cellular device is configured to connect to the subscribed LWN.

12. A cellular device according to any of claims 9 to 11, wherein the enterprise connectivity policy is used by the cellular device to update a MDM profile implemented on the cellular device.

13. A cellular device according to claim 12, wherein the MDM profile is implemented using a mobile device management (MDM) client running on the cellular device.

14. A communications network comprising a first server arranged to push first connection policies to one or more wireless devices, and a second server arranged to push second connection policies to the one or more wireless devices, wherein the first server is arranged to receive notifications from a wireless device when that device attempts to connect to a wireless access point, if a second connection policy on the wireless device prevents access to that access point, and the first server is further arranged to send a request to the second server, requesting that the second connection policy on the wireless device be updated to allow access to the access point.

15. A server in a communications network arranged to push first connection policies to one or more wireless devices, wherein the server is arranged to receive notifications from a wireless device when that device attempts to connect to a wireless access point, if a second connection policy on the wireless device prevents access to that access point, and the first server is further arranged to send a notification to a second server, requesting that the second connection policy on the wireless device be updated to allow access to the access point.

16. A server in a communications network arranged to push first connection policies to one or more wireless devices, wherein the server is arranged to receive notifications from a second server, requesting that a first connection policy on the wireless device be updated to allow access to the access point, when that wireless device attempts to connect to a wireless access point, if the first connection policy prevents access to that access point.

17. A method of providing wireless devices with access to access points in a communications network, in which the wireless devices include first connection policies issued by a first server and second connection policies issued by a second server, the method comprising: if a second connection policy prevents a wireless device accessing a wireless access point to which access has been granted by a first connection policy, the first server requesting that the second server update the second connection policy to allow the wireless device access to the access point.
